(19) **Europäisches Patentamt / European Patent Office / Office européen des brevets**

(11) **EP 2 572 176 B1**

(12) **FASCICULE DE BREVET EUROPEEN**

(45) Date de publication et mention de la délivrance du brevet:
**20.02.2019 Bulletin 2019/08**

(21) Numéro de dépôt: **11727237.7**

(22) Date de dépôt: **19.05.2011**

(51) Int Cl.:
*G01L 3/10* (2006.01)     *G01P 3/488* (2006.01)
*G01P 3/489* (2006.01)

(86) Numéro de dépôt international:
**PCT/FR2011/051141**

(87) Numéro de publication internationale:
**WO 2011/144874 (24.11.2011 Gazette 2011/47)**

(54) **PROCEDE DE DETERMINATION DU COUPLE DE TORSION ET/OU DE LA VITESSE ANGULAIRE D'UN ARBRE EN ROTATION ET DISPOSITIF POUR LA MISE EN OEUVRE DU PROCEDE**

VERFAHREN ZUR BESTIMMUNG DES DREHMOMENTS UND/ODER DER WINKELGESCHWINDIGKEIT EINER DREHWELLE UND VORRICHTUNG ZUR AUSFÜHRUNG DES VERFAHRENS

METHOD FOR DETERMINING THE TORQUE AND/OR ANGULAR SPEED OF A ROTATING SHAFT AND DEVICE FOR CARRYING OUT SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2010 FR 1053973**

(43) Date de publication de la demande:
**27.03.2013 Bulletin 2013/13**

(73) Titulaire: **Safran Aircraft Engines**
**75015 Paris (FR)**

(72) Inventeurs:
• **AMEIL, Jean-Michel**
  **F-77950 Rubelles (FR)**
• **BRICHLER, Thierry**
  **F-75011 Paris (FR)**

(74) Mandataire: **Camus, Olivier Jean-Claude**
**Cabinet Camus Lebkiri**
**25, Rue de Maubeuge**
**75009 Paris (FR)**

(56) Documents cités:
**WO-A2-2004/067215     DE-A1- 19 817 886**
**GB-A- 2 133 885     GB-A- 2 383 417**
**US-B1- 6 460 422**

**Description**

**DOMAINE TECHNIQUE DE L'INVENTION**

La présente invention concerne un procédé de détermination du couple de torsion et/ou de la vitesse angulaire d'un arbre en rotation, ainsi qu'un dispositif permettant de mettre en oeuvre le procédé de détermination selon l'invention. La présente invention concerne également l'utilisation du procédé selon l'invention pour calculer le couple de torsion de l'arbre ou pour calculer sa vitesse angulaire. La présente invention concerne également un arbre pourvu d'un dispositif selon l'invention.

**ETAT ANTERIEUR DE LA TECHNIQUE**

Quand un couple est appliqué à un arbre de transmission, il subit une déformation en torsion. Pour un module d'élasticité connu, et à température constante, l'angle de torsion est proportionnel au couple transmis.

L'état de la technique connaît différents procédés de mesure de couple de torsion qui utilisent ce principe.

Ainsi, un des moyens les plus simples de mesurer un couple est de mesurer le déphasage entre deux roues phoniques montées chacune à une extrémité d'un arbre. Dans ce cas, un capteur à reluctance variable enregistre un signal représentatif de la position angulaire de chacune des roues. Le décalage angulaire entre les deux roues permet de connaître le couple transmis par l'arbre.

Toutefois, ce procédé de mesure n'est pas très précis car il est très sensible aux mouvements de flexion de l'arbre, ainsi qu'aux perturbations extérieures (température, vibrations...).

Afin de limiter les imprécisions de mesure du couple, un autre procédé consiste à rapprocher les deux roues phoniques de manière à limiter les erreurs causées par les mouvements relatifs des deux roues phoniques par rapport aux capteurs. Toutefois, dans ce cas, on ne peut pas simplement rapprocher les deux roues l'une de l'autre car cela conduirait à une nette diminution de la sensibilité du système. La première roue phonique est donc rapprochée de la deuxième via un manchon de référence non transmetteur de couple, de façon à ce que la première roue phonique soit solidaire d'un point distant du point auquel est relié la deuxième roue phonique. Dans ce cas, les deux roues présentent généralement des dents qui sont intercalées et un seul capteur à reluctance variable enregistre un signal qui présente une impulsion à chaque fois qu'une dent passe devant le capteur. Le calcul du couple est ensuite généralement issu de la détection du passage par zéro du front descendant du signal et de la mesure du temps qui s'écoule entre deux fronts descendants successifs du signal.

Ce procédé permet bien de diminuer les imprécisions de mesure dues à l'écartement des roues. Toutefois, on constate expérimentalement que le calcul du couple est fortement bruité car ce procédé est très sensible aux perturbations extérieures, aux perturbations électromagnétiques, ainsi qu'aux bruits.

Or la précision et la fiabilité de la mesure du couple de torsion sont primordiales, car le couple de torsion est ensuite utilisé pour calculer la puissance du moteur auquel est relié l'arbre.

Le document DE19817886 décrit un dispositif de détermination du couple de torsion d'un arbre rotatif comportant un capteur pourvu de deux parties qui peuvent bouger par rapport à l'arbre et un calculateur. Les documents WO 2004/067215, GB 2 133 885, US 6 460 422 et GB 2 383 417 décrivent d'autres dispositifs de détermination du couple de torsion.

**EXPOSE DE L'INVENTION**

L'invention vise à remédier aux inconvénients de l'état de la technique en proposant un procédé de détermination du couple de torsion d'un arbre qui soit plus précis que ceux de l'art antérieur. Un autre objet de l'invention est de proposer un procédé de détermination du couple de torsion d'un arbre qui soit peu sensible aux bruits et perturbations extérieures.

Un autre objet de l'invention est de proposer un procédé de détermination du couple de torsion d'un arbre qui soit fiable.

Un autre objet de l'invention est de proposer un procédé de détermination de la vitesse angulaire d'un arbre en rotation, qui soit précis et peu bruité.

Pour ce faire, un premier aspect de l'invention concerne un procédé de détermination du couple de torsion et/ou de la vitesse de rotation d'un arbre en rotation selon la revendication 1.

Le procédé selon l'invention est particulièrement remarquable en ce que la détermination de paramètres tel que le couple de torsion de l'arbre ne se fait plus à partir d'un seul point du signal, mais elle se fait à partir de tout le signal. En effet, contrairement aux procédés de l'art antérieur, on n'utilise plus seulement le point de passage par zéro du signal analogique, mais on utilise tout le signal sur un tour ou sur une portion de tour. En effet, l'ensemble de ce signal est corrélé avec le signal du tour suivant ou de la portion de tour suivante et c'est la fonction d'intercorrélation qui permet de calculer la durée entre deux impulsions. Le fait de calculer les instants $t_1$ et $t_2$ auxquels ont lieu les maximums de la fonction d'intercorrélation permet donc de connaître les instants $t_1$ et $t_2$ auxquels ont lieu les impulsions du signal analogique considéré. Et comme chaque impulsion correspond au passage d'une dent devant le capteur, cela permet de calculer la durée entre deux passages de dents. Ce calcul des instants $t_1$ et $t_2$ pour lesquels la fonction d'intercorrélation est maximum permet de calculer très précisément la durée entre deux passages de dents devant le capteur. En outre, ce calcul est très peu sensible aux perturbations et bruits extérieurs, en raison des intégrations réalisées par l'intercorrélation. L'étape de cal-

cul des maximums de la fonction d'intercorrélation est réalisée par interpolation de la fonction d'intercorrélation. Ce mode de calcul est très précis.

**[0015]** Lorsque le procédé selon l'invention permet de déterminer le couple de torsion d'un arbre, le procédé selon l'invention utilise de préférence deux roues, appelées dans la suite première roue et deuxième roue, la première roue étant solidaire d'un premier point de l'arbre et la deuxième roue étant solidaire d'un deuxième point de l'arbre, le premier point étant distant du deuxième point de façon à ce que la première roue et la deuxième roue permettent d'enregistrer le couple de torsion de l'arbre. Avantageusement, la première et la deuxième roues sont disposées de façon à ce que les dents de la première roues soient alternées avec les dents de la deuxième roue.

**[0016]** Le procédé selon l'invention est tout particulièrement avantageux pour calculer le couple de torsion de l'arbre. Dans le cas où l'arbre est pourvu de deux roues présentant des dents alternées, l'étape de calcul de la durée entre deux impulsions est de préférence une étape de calcul de la durée entre deux impulsions successives. L'étape de calcul de la durée entre deux impulsions correspond alors à une étape de calcul de la durée entre l'impulsion n et l'impulsion n+1. Physiquement, cette étape de calcul de la durée entre deux impulsions successives correspond alors au décalage angulaire entre la première dent de la première roue et la première dent de la deuxième roue. Le couple de torsion de l'arbre est ensuite calculé car on connaît la fonction affine qui relie le couple de torsion et le décalage angulaire entre la première dent de la première roue et la première dent de la deuxième roue.

**[0017]** Le procédé selon l'invention peut aussi être utilisé pour calculer la vitesse de rotation de l'arbre de façon plus précise, si nécessaire. Dans le cas où l'arbre est pourvu de deux roues présentant des dents alternées, l'étape de calcul de la durée entre deux impulsions est alors de préférence une étape de calcul de la durée entre deux impulsions qui correspondent chacune au passage de deux dents successives de la même roue. Dans ce cas, l'étape de calcul de la durée entre deux impulsions correspond alors à une étape de calcul de la durée entre l'impulsion n et l'impulsion n+2.

**[0018]** Selon un mode de réalisation très préférentiel, l'interpolation de la fonction d'intercorrélation est réalisée par une méthode d'interpolation parabolique aux moindres carrés.

**[0019]** Selon différents modes de réalisation :

- le premier signal analogique et le deuxième signal analogique présentent chacun une durée égale à la durée d'un tour complet de l'arbre, ou
- le premier signal analogique et le deuxième signal analogique présentent chacun une durée égale la durée d'un sixième de tour de l'arbre,
- le premier signal analogique et le deuxième signal analogique correspondent chacun au signal généré par le capteur pendant deux tours consécutifs de l'arbre ;
- le premier signal analogique et le deuxième signal analogique correspondent chacun au signal généré par le capteur pendant deux portions de tour de l'arbre qui sont consécutives, ces portions de tour de l'arbre sont de préférence égale à un sixième de tour de l'arbre lorsque les roues comportent six dents équidistantes.

**[0020]** L'invention concerne également l'utilisation du procédé selon l'une quelconque des revendications précédentes pour calculer la torsion d'un arbre.

**[0021]** Dans ce cas, le procédé selon l'invention utilise de préférence les éléments suivants :

- une première et une deuxième roues, la première roue étant solidaire d'un premier point de l'arbre, la deuxième roue étant solidaire d'un deuxième point de l'arbre, le deuxième point de l'arbre étant distant du premier point de l'arbre, la première et la deuxième roues étant chacune pourvues de dents, les dents de la première roue étant disposées en alternance par rapport aux dents de la deuxième roue ;
- un capteur apte à transformer le passage de chacune des dents de la première et de la deuxième roues en impulsions d'un signal analogique ;

et le procédé comporte alors de préférence les étapes suivantes :

- génération d'un premier signal analogique présentant des impulsions générées par le passage des dents devant le capteur pendant un tour ou une portion de tour de l'arbre ;
- numérisation du premier signal analogique en un premier signal numérique ;
- génération d'un deuxième signal analogique présentant des impulsions générées par le passage des dents devant le capteur pendant le tour suivant ou la portion de tour suivante de l'arbre,
- numérisation du deuxième signal analogique en un deuxième signal numérique ;
- calcul de la fonction d'intercorrélation du premier signal numérique avec le deuxième signal numérique;
- calcul de la durée entre deux impulsions successives du premier signal analogique à l'aide de la fonction d'intercorrélation;
- calcul du couple de torsion de l'arbre à partir de la durée entre deux impulsions successives du premier signal analogique.

**[0022]** L'invention concerne également l'utilisation du procédé selon l'une quelconque des revendications précédentes pour calculer la vitesse de rotation d'un arbre.

**[0023]** Selon un autre aspect, l'invention concerne également un dispositif selon la revendication 6 pour la mise en oeuvre d'un procédé selon l'invention.

Avantageusement, le dispositif comporte une première et une deuxième roues.

Avantageusement, les dents de la première roue sont disposées en alternance avec les dents de la deuxième roue.

Avantageusement, le convertisseur analogique-numérique travaille à une fréquence d'échantillonnage fe.

Avantageusement, le calculateur calcule la fonction d'intercorrélation à une fréquence de travail égale à la fréquence d'échantillonnage fe.

Avantageusement, les signaux analogiques issus du capteur sont des signaux électriques.

Avantageusement, le capteur est un transducteur à reluctance variable.

Avantageusement, le calculateur est apte à interpoler la fonction d'intercorrélation de deux signaux numériques issus du convertisseur, et ce de préférence par une méthode d'interpolation parabolique aux moindres carré.

L'invention concerne également un arbre pourvu d'un dispositif selon l'invention.

**BREVE DESCRIPTION DES FIGURES**

D'autres caractéristiques et avantages de l'invention ressortiront à la lecture de la description qui suit, en référence aux figures annexées, qui illustrent :

- la figure 1, une représentation schématique en perspective d'un arbre pourvu d'un dispositif selon un mode de réalisation de l'invention ;
- la figure 2, une représentation schématique en coupe transversale de l'arbre et du dispositif de la figure 1 ;
- la figure 3, une représentation schématique d'un premier signal analogique obtenu par le dispositif de la figure 1 ;
- la figure 4, une représentation schématique d'une fonction d'intercorrélation obtenue par le dispositif de la figure 1 ;
- la figure 5, une représentation schématique d'une unité de calcul utilisée par un dispositif selon un mode de réalisation de l'invention.

Pour plus de clarté, les éléments identiques ou similaires sont repérés par des signes de référence identiques sur l'ensemble des figures.

**DESCRIPTION DETAILLEE D'UN MODE DE REALISATION**

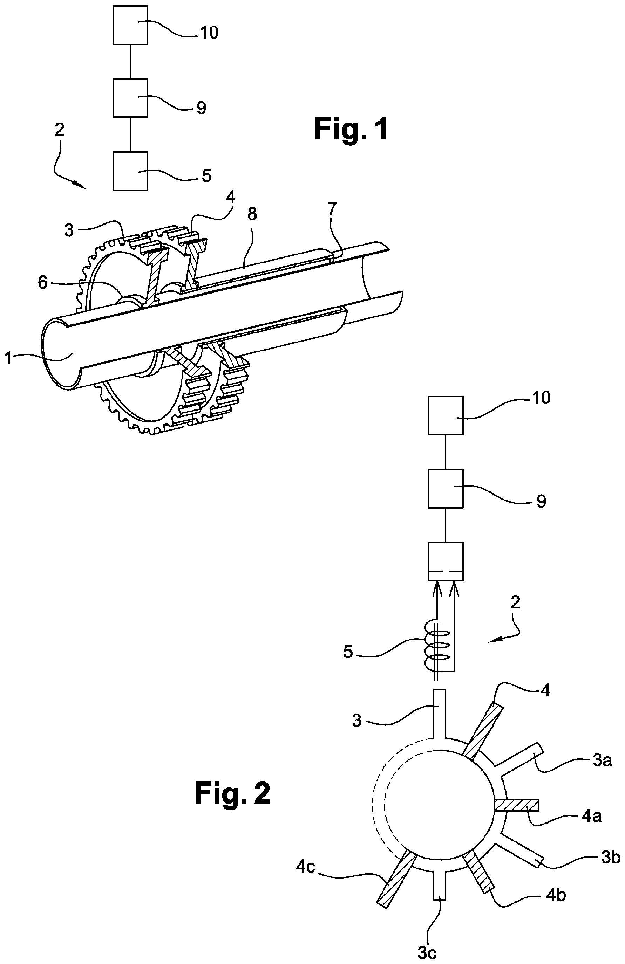

Les figures 1 et 2 représentent un arbre 1 pourvu d'un dispositif 2 selon un mode de réalisation de l'invention. Le dispositif 2 comporte une première roue 3 et une deuxième roue 4. La première roue 3 et la deuxième roue 4 sont de préférence des roues phoniques. La première roue 3 est solidaire d'un premier point 6 de l'arbre 1. La deuxième roue 4 est solidaire d'un deuxième point 7 de l'arbre 1. La deuxième roue 4 est reliée au deuxième point 7 par l'intermédiaire d'un manchon 8 non transmetteur de couple, de sorte que la deuxième roue 4 est située à proximité de la première roue 3, mais elle est solidaire d'un point 7 qui est distant du point 6 duquel est solidaire la première roue 3.

La première et la deuxième roues 3 et 4 sont chacune pourvues de dents, respectivement 3a, 3b, 3c... et 4a, 4b, 4c.... Chaque roue comporte de préférence 6 dents 3a à 3f et 4a à 4f. Les dents de la première roue 3 sont disposées de façon à ce qu'elles soient alternées avec les dents de la deuxième roue 4. Ainsi, la dent 3a se trouve entre les dents 4f et 4a, la dent 3b se trouve entre les dents 4a et 4b...

Le dispositif selon l'invention comporte également un capteur 5 disposé au dessus des roues 3 et 4 de manière à être sensible au passage de chacune des dents des deux roues. Le capteur 5 émet un signal analogique présentant une impulsion à chaque fois qu'une dent passe devant lui.

Le capteur 5 est de préférence un transducteur à reluctance variable qui génère une impulsion électrique à chaque fois qu'une dent passe devant lui.

Le dispositif 2 comporte également un convertisseur analogique-numérique 9 apte à transformer le signal analogique issu du capteur 5 en signal numérique à une fréquence d'échantillonnage fe. Le signal numérique est de préférence stocké sur 12 ou 16 bits.

Le dispositif 2 comporte également un calculateur 10 qui est notamment apte à :

- calculer la fonction d'intercorrélation de deux signaux numériques issus du convertisseur ; et
- calculer la durée entre deux impulsions du signal analogique à partir de la fonction d'intercorrélation.

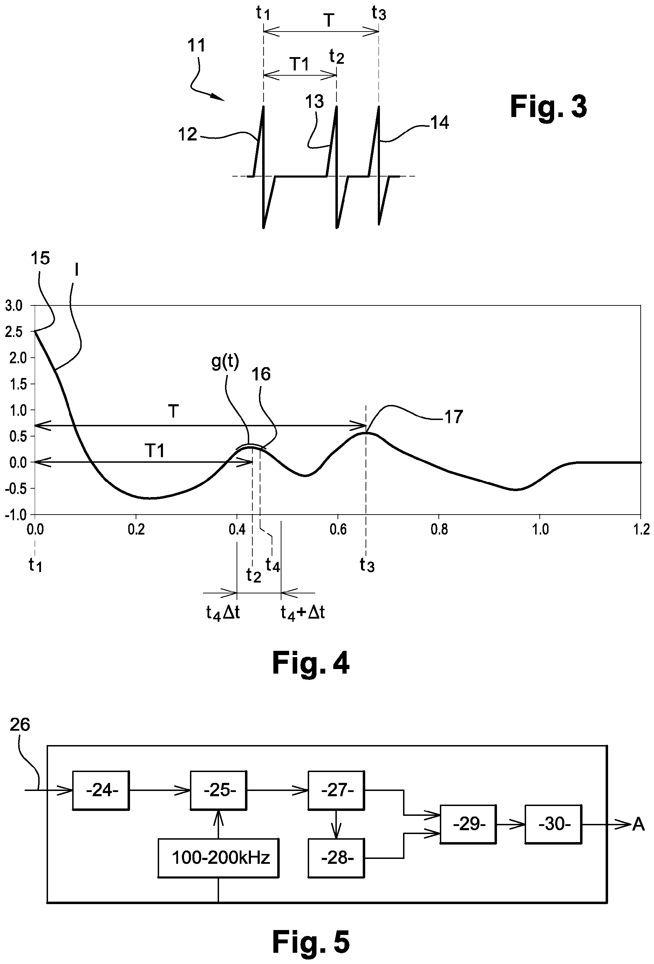

Un procédé selon un mode de réalisation de l'invention va maintenant être décrit en référence aux figures 3 et 4.

Lors d'une première étape, le capteur 5 produit un premier signal analogique 11, représenté sur la figure 3. Dans cet exemple, le signal analogique 11 correspond au signal généré par le capteur 5 pendant un sixième de tour de l'arbre. Toutefois, on pourrait envisager d'enregistrer le signal analogique émis par le capteur pendant un tour complet de l'arbre sans sortir du cadre de l'invention.

Comme on peut le voir sur la figure 3, le premier signal analogique 11 présente une impulsion à chaque fois qu'une dent passe devant le capteur. Ainsi, la première impulsion 12 correspond au passage de la première dent 3a de la première roue 3 devant le capteur 5. Par « première dent », on entend la première dent qui passe devant le capteur à partir du moment où le procédé selon l'invention commence. Cette « première dent » n'est pas forcément la première dent qui passe devant le capteur dans l'absolu. La deuxième impulsion 13 correspond au passage de la première dent 4a de la deuxième roue 4 devant le capteur 5. La troisième impulsion 14 correspond au passage de la deuxième dent 3b de la première roue 3 devant le capteur.

L'écartement des dents d'une même roue étant constant, l'estimation de la durée entre deux impulsions correspondant aux dents d'une même roue permet de connaître la vitesse de rotation de l'arbre. Ainsi, l'estimation de la durée T entre les impulsions 12 et 14 permet de connaître la vitesse angulaire de l'arbre 1.

L'écartement entre les dents de la première roue 3 et celles de la deuxième roue 4 dépend par contre du couple de torsion de l'arbre. Par conséquent, l'estimation de la durée T1 entre l'impulsion 12, qui correspond au passage de la première dent 3a de la première roue, et l'impulsion 13, qui correspond au passage de la première dent 4a de la deuxième roue, permet de connaître le couple de torsion de l'arbre.

Le premier signal analogique est ensuite converti en un premier signal numérique. La conversion du premier signal analogique en un premier signal numérique est de préférence réalisée à haute fréquence, c'est-à-dire à une fréquence d'échantillonnage de préférence supérieure ou égale à 100 kHz, de préférence égale à 200 kHz. Le premier signal numérique est ensuite enregistré.

Un deuxième signal analogique est ensuite généré. Ce deuxième signal analogique présente une durée égale à celle du premier signal analogique, mais il est décalé dans le temps. Ainsi, lorsque le premier signal analogique correspond au signal émis par le capteur pendant un tour complet de l'arbre, le deuxième signal analogique correspond de préférence au signal émis par le capteur pendant le tour suivant de l'arbre. Dans le cas présent, comme le premier signal analogique correspond au signal émis par le capteur pendant un sixième de tour de l'arbre, le deuxième signal analogique correspondra également au signal émis par le capteur pendant un sixième de tour de l'arbre. Le sixième de tour de l'arbre pendant lequel le deuxième signal analogique a lieu peut être le sixième de tour de l'arbre qui succède directement au sixième de tour de l'arbre pendant lequel le premier signal analogique a lieu ou alors il peut être décalé d'un tour ou d'une portion de tour par rapport au sixième de tour de l'arbre pendant lequel le premier signal analogique a lieu.

Ainsi, si le premier signal analogique est le signal qui correspond à un passage des dents 3a, 4a et 3b devant le capteur, le deuxième signal analogique pourra correspondre soit au prochain passage des dents 3a, 4a et 3b devant le capteur, soit au passage des dents 4b, 3c, 4c. Lorsque l'arbre tourne à une vitesse constante et qu'il transmet un couple de valeur constante, le deuxième signal analogique est donc généralement sensiblement identique au premier signal analogique, à la différence près qu'il est décalé dans le temps.

Le deuxième signal analogique est ensuite converti en un deuxième signal numérique. La conversion du deuxième signal analogique en un deuxième signal numérique est réalisée à la même fréquence d'échantillonnage que la conversion du premier signal analogique en un premier signal numérique. Le deuxième signal numérique est enregistré.

Le procédé selon l'invention comporte ensuite une étape au cours de laquelle le premier signal numérique et le deuxième signal numérique sont intercorrélés numériquement, de préférence à une fréquence d'échantillonnage égale à la fréquence à laquelle les signaux analogiques ont été numérisés.

Ainsi, si x(k), pour k variant de 1 à n-m, désigne le premier signal numérique et y(k), pour k variant de 1 à n-m, désigne le deuxième signal numérique, alors la fonction d'intercorrélation temporelle du premier et du deuxième signal numérique est donnée, pour chaque point m, par :

$$I(m) = \sum_{k=1}^{n-m} \frac{(x(k)-x_m)*(y(m+k)-y_m)}{n}$$

Avec :

- n qui désigne la durée totale de chacun des signaux numériques;
- $x_m$ qui désigne la valeur moyenne du premier signal numérique ;
- $y_m$ qui désigne la valeur moyenne du deuxième signal numérique.

On calcule donc la fonction d'intercorrélation I(m) pour chaque point m appartenant à l'intervalle [0, n]. La fonction d'intercorrélation I ainsi obtenue est représentée sur la figure 4.

Comme on peut le voir sur la figure 4, la fonction d'intercorrélation I présente un maximum 15, 16, 17 à chaque fois que le premier signal analogique présente une impulsion, respectivement 12, 13 et 14.

Jusqu'ici, le procédé selon l'invention est identique, qu'il soit utilisé pour calculer la vitesse de rotation de l'arbre ou pour calculer son couple de torsion. Selon que le procédé selon l'invention est utilisé pour calculer le couple de torsion, ou pour calculer la vitesse angulaire, seule diffère ensuite l'étape de calcul de la durée entre deux impulsions, et plus précisément, seules changent les impulsions entre lesquelles on calcule la durée.

Ainsi, lorsque l'on utilise le procédé selon l'invention pour connaître le couple de torsion de l'arbre, on calcule la durée entre deux impulsions successives, c'est-à-dire qu'on calcule la durée T1 entre les impulsions 12 et 13.

Par contre, si l'on utilise le procédé selon l'invention pour connaître la vitesse angulaire de l'arbre, on calculera la durée T entre les impulsions 12 et 14, qui sont les deux impulsions correspondant à deux dents successives appartenant à une même roue.

L'étape de calcul de la durée entre deux impulsions va maintenant être décrite en détail dans le cas où l'on calcule la durée T1 entre les deux impulsions 12 et 13 afin de connaître le couple de torsion de l'arbre. Toutefois, les mêmes étapes de calcul peuvent être utilisées pour calculer la durée entre les impulsions 12 et 14 lorsque l'on veut connaître la vitesse angulaire de l'arbre.

Ainsi, pour calculer la durée T1 entre les impulsions 12 et 13, le procédé selon l'invention comporte une étape de calcul de la durée T1 entre les maximums 15 et 16 de la fonction d'intercorrélation.

Selon un mode préférentiel de l'invention, le temps t1=0 correspond sur I(t) à la première impulsion, c'est-à-dire au passage de la première dent de la première roue devant le capteur. Par conséquent, pour connaître le temps T1, il suffit de connaître le temps t2 pour lequel la fonction d'intercorrélation atteint le maximum 16, qui correspond à l'impulsion 13, qui elle-même correspond au passage de la première dent de la deuxième roue devant le capteur.

Pour connaître le temps t2, on sait que le première dent de la deuxième roue passe devant le capteur après un temps t4 de l'ordre de 1/12$^{ième}$ de tour de l'arbre (en effet, chaque roue comporte six dents et les dents de la première et de la deuxième roues sont intercalées). On se place donc dans un intervalle de temps [t4-$\Delta$t, t4+$\Delta$t] situé autour de t4 dans lequel on est sûr de trouver le maximum 16 de la fonction d'intercorrélation.

On interpole ensuite la fonction d'intercorrélation I, de préférence par interpolation parabolique aux moindres carrés, sur cet intervalle [t4-$\Delta$t, t4+$\Delta$t]. On recherche par exemple la fonction de la forme g(t) = a*t$^2$ + b*t + c qui s'approche de plus de la fonction d'intercorrélation I sur cet intervalle. La fonction g(t) ainsi obtenue est représentée sur la figure 4. On recherche ensuite le point t pour lequel la fonction g(t) atteint son maximum.

Dans le cas présent, la fonction g(t) atteint son maximum pour t=t2. La durée T1 entre les deux impulsions 12 et 13 est alors donnée par :

$$T1 = t2 - t1 = t2 - 0.$$

Le procédé selon l'invention permet donc de connaître de manière très précise la durée T1 et donc le couple de torsion de l'arbre, en réduisant automatiquement les bruits de phase non gaussiens des signaux, et ce sans utiliser de filtre additionnel.

Cette détermination précise du couple de torsion permet ensuite de connaître la puissance transmise par l'arbre.

La figure 5 représente une unité de calcul mettant en oeuvre le procédé selon l'invention. Cette unité de calcul permet de calculer la puissance d'un système transmise par l'arbre.

Pour cela, l'unité de calcul comporte de préférence un premier filtre passe-bas 24 permettant de filtrer les signaux analogiques qui lui parviennent. Avantageusement, le filtre 24 permet également d'amplifier les signaux. L'unité de calcul comporte également un convertisseur analogique numérique 25 pour convertir le signal filtré en un signal numérique à une fréquence d'échantillonnage fe.

L'unité de calcul comporte également une mémoire 27 et 28 permettant de mémoriser les signaux numériques sur un tour ou sur 1/6$^e$ de tour pendant deux tours consécutifs ou deux portions de tour consécutives.

L'unité de calcul comporte également un processeur 29 permettant d'intercorréler des signaux numériques, ainsi qu'un deuxième processeur 30 permettant d'interpoler la fonction d'intercorrélation obtenue par le processeur 29.

Naturellement l'invention n'est pas limitée aux modes de réalisation détaillés ici et on pourra en particulier envisager d'utiliser d'autres méthodes d'interpolation de la fonction d'intercorrélation. On pourra également envisager d'utiliser d'autres fréquences d'échantillonnage lors de la conversion analogique/numérique.

Par ailleurs, les dents 3a, 3b et 4a ne sont utilisées qu'à titre d'exemple, et toute autre dent pourrait être utilisée. En outre, on pourrait également envisager de calculer la durée T (resp. T1) à l'aide des deux dents 3a et 4a (resp. 3a et 3b) puis de la calculer à l'aide des dents 3b et 4b (resp. 3b et 3c) et de moyenner les valeurs ainsi obtenues.

## Revendications

1.    Procédé de détermination du couple de torsion et/ou de la vitesse de rotation d'un arbre (1) en rotation, à l'aide de :

- une ou plusieurs roues (3, 4) pourvues de dents (3a-3f, 4a-4f), chaque roue (3, 4) étant solidaire d'un point (6, 7) de l'arbre (1),
- un capteur (5) apte à générer une impulsion (12, 13, 14) d'un signal analogique à chaque fois qu'une dent (3a-3f, 4a-4f) passe devant lui ;

le procédé comportant les étapes suivantes :

- génération d'un premier et d'un deuxième signal analogique à l'aide du capteur, le deuxième signal analogique étant décalé dans le temps par rapport au premier signal analogique, le deuxième signal analogique présentant une durée égale à la durée du premier signal analogique;
- conversion du premier et du deuxième signal analogique en un premier et un deuxième signal numérique le procédé étant **caractérisé en ce qu'**il comporte les étapes suivantes:
- calcul de la fonction d'intercorrélation (I) temporelle du premier signal numérique avec le deuxième signal numérique;

- calcul de la durée (T1, T) entre deux impulsions (12-13, 12-14) du premier signal analogique à l'aide de la fonction d'intercorrélation (I), l'étape de calcul de la durée entre deux impulsions (12-13, 12-14) comportant les sous étapes suivantes :

　◦ Identification des maximums (15, 16 ou 15, 17) de la fonction d'intercorrélation ;
　◦ Calcul des temps t1 et t2 pour lesquels la fonction d'intercorrélation atteint ces maximums par interpolation de la fonction d'intercorrélation, l'interpolation de la fonction d'intercorrélation n'étant effectuée que sur des intervalles de temps ([t4-Δt, t4+Δt]) dans lesquels les temps t1 et t2 sont attendus;
　◦ Calcul de la durée (T1, T) entre ces temps t1 et t2.

**2.** Procédé selon la revendication précédente, dans lequel une première (3) et une deuxième roues (4) sont utilisées, la première roue (3) étant solidaire d'un premier point (6) de l'arbre (1) et la deuxième roue (4) étant solidaire d'un deuxième point (7) de l'arbre (1), le premier point (6) étant distant du deuxième point (7), la première et la deuxième roues étant disposées de façon à ce que les dents de la première roue (3a-3f) soient alternées avec les dents (4a, 4f) de la deuxième roue.

**3.** Procédé selon l'une des revendications précédentes, **caractérisé en ce que** l'interpolation de la fonction d'intercorrélation est réalisée par une méthode d'interpolation parabolique aux moindres carrés.

**4.** Procédé selon l'une quelconque des revendications précédentes, **caractérisé en ce que** le premier signal analogique et le deuxième signal analogique présentent chacun une durée égale à :

　- la durée d'un tour complet de l'arbre ou
　- la durée d'un sixième de tour de l'arbre.

**5.** Procédé selon l'une quelconque des revendications précédentes, **caractérisé en ce que** le premier signal analogique et le deuxième signal analogique correspondent chacun au signal généré par le capteur pendant deux tours ou portions de tour de l'arbre qui sont consécutif(ve)s.

**6.** Dispositif pour la mise en oeuvre du procédé selon l'une quelconque des revendications 1 à 5, comportant:

　- une ou plusieurs roues (3, 4) pourvues de dents (3a-3f, 4a-4f), chaque roue (3, 4) étant solidaire d'un point (6, 7) de l'arbre (1),

　- un capteur (5) apte à transformer le passage de chaque dent (3a-3f, 4a-4f) en impulsions (12, 13, 14) d'un signal analogique (11);
　- un convertisseur analogique-numérique (9, 25) apte à transformer le signal analogique issu du capteur (5) en signal numérique ;

**caractérisé en ce qu'**il comporte:

　- un calculateur (10, 29, 30) apte à :

　　◦ calculer la fonction d'intercorrélation (I) de deux signaux numériques issus du convertisseur analogique-numérique ;
　　◦ calculer la durée (T1, T) entre deux impulsions (12, 13, 13) du signal analogique à partir de la fonction d'intercorrélation (I) ;
　　◦ Identifier des maximums (15, 16 ou 15, 17) de la fonction d'intercorrélation ;
　　◦ Calculer des temps t1 et t2 pour lesquels la fonction d'intercorrélation atteint ces maximums par interpolation de la fonction d'intercorrélation, le calculateur étant en outre apte à interpoler la fonction d'intercorrélation que sur des intervalles de temps ([t4-Δt, t4+Δt]) dans lesquels les temps t1 et t2 sont attendus;
　　◦ Calculer la durée (T1, T) entre ces temps t1 et t2.

**7.** Dispositif selon la revendication précédente, **caractérisé en ce qu'**il comporte une première (3) et une deuxième roues (4), les dents (3a-3f) de la première roue étant disposées en alternance avec les dents (4a-4f) de la deuxième roue.

**8.** Arbre (1) pourvu d'un dispositif selon l'une quelconque des revendications 6 ou 7.

**Patentansprüche**

**1.** Bestimmungsverfahren des Drillmoments und / oder der Rotationsgeschwindigkeit einer Welle (1) in Rotation mithilfe von:

　- einem oder mehreren Rädern (3, 4), die mit Zähnen (3a - 3f, 4a - 4f) versehen sind, wobei jedes Rad (3, 4) fest mit einem Punkt (6, 7) der Welle (1) verbunden ist;
　- einem Sensor (5), der geeignet ist, einen Impuls (12, 13, 14) eines analogen Signals jedes Mal dann zu generieren, wenn ein Zahn (3a - 3f, 4a - 4f) an ihm vorbeifährt;

wobei das Verfahren die folgenden Schritte umfasst:

　- Erzeugen eines ersten und eines zweiten analogen Signals mithilfe des Sensors, wobei das zweite analoge Signal zeitlich im Verhältnis zum ersten analogen Signal versetzt ist, wobei das zweite analoge Signal eine Dauer gleich der Dauer des ersten analogen Signals aufweist;

- Umwandlung des ersten und des zweiten analogen Signals in ein erstes und ein zweites numerisches Signal, wobei das Verfahren **dadurch gekennzeichnet ist, dass** es die folgenden Schritte umfasst:

- Berechnen der zeitlichen Interkorrelationsfunktion (I) des ersten numerischen Signals mit dem zweiten numerischen Signal;

- Berechnen der Dauer (T1, T) zwischen zwei Impulsen (12 - 13, 12 - 14) des ersten analogen Signals mithilfe der Interkorrelationsfunktion (I), wobei der Berechnungsschritt der Dauer zwischen zwei Impulsen (12 - 13, 12 - 14) die folgenden Teilschritte umfasst:

  ◦ Identifizieren der Maxima (15, 16, oder 15, 17) der Interkorrelationsfunktion;
  ◦ Berechnen der Zeiten t1 und t2, für die die Interkorrelationsfunktion diese Maxima per Interpolation der Interkorrelationsfunktion erreicht, wobei die Interpolation der Interkorrelationsfunktion nur bei Zeitintervallen ([t4-$\Delta$t, t4 + $\Delta$t]) erfolgt, bei denen die Zeiten t1 und t2 erwartet werden;
  ◦ Berechnen der Dauer (T1, T) zwischen diesen Zeiten t1 und t2.

2. Verfahren gemäß dem voranstehenden Anspruch, bei dem ein erstes (3) und ein zweites Rad (4) verwendet werden, wobei das erste Rad (3) fest mit einem ersten Punkt (6) der Welle (1) verbunden ist und das zweite Rad (4) fest mit einem zweiten Punkt (7) der Welle (1) verbunden ist, wobei der erste Punkt (6) von dem zweiten Punkt (7) entfernt ist, und das zweite Rad derart angeordnet ist, dass die Zähne des ersten Rades (3a - 3f) mit den Zähnen (4a, 4f) des zweiten Rades alternieren.

3. Verfahren gemäß einem der voranstehenden Ansprüche, **dadurch gekennzeichnet, dass** die Interpolation der Interkorrelationsfunktion durch ein parabolisches Interpolationsverfahren der kleinsten Quadrate realisiert ist.

4. Verfahren gemäß irgendeinem der voranstehenden Ansprüche, **dadurch gekennzeichnet, dass** das erste analoge Signal und das zweite analoge Signal jeweils eine Dauer aufweisen gleich:

  - der Dauer einer kompletten Umdrehung der Welle oder
  - der Dauer einer Sechstel-Umdrehung der Welle.

5. Verfahren gemäß irgendeinem der voranstehenden Ansprüche, **dadurch gekennzeichnet, dass** das erste analoge Signal und das zweite analoge Signal jeweils dem Signal entsprechen, das vom Sensor während zweier Umdrehungen oder Abschnitten von Umdrehungen der Welle generiert wird, die konsekutiv sind.

6. Vorrichtung für die Umsetzung des Verfahrens gemäß irgendeinem der Ansprüche 1 bis 5, umfassend:

  - ein oder mehrere, mit Zähnen (3a - 3f, 4a - 4f) versehene Räder (3, 4), wobei jedes Rad fest mit einem Punkt (6, 7) der Welle (1) verbunden ist,
  - einen Sensor (5), der geeignet ist, den Durchgang jedes Zahns (3a - 3f, 4a - 4 f) in Impulse (12, 13, 14) eines analogen Signals (11) umzuwandeln;
  - einen analog-numerischen Wandler (9, 25), der geeignet ist, das aus dem Sensor (5) stammende analoge Signal in ein numerisches Signal umzuwandeln, **dadurch gekennzeichnet, dass** es umfasst:
  - einen Rechner (10, 29, 30), der geeignet ist:

    ◦ die Interkorrelationsfunktion (I) von zwei aus dem analogennumerischen Wandler stammenden numerischen Signalen zu berechnen;
    ◦ die Dauer (T1, T) zwischen zwei Impulsen (12, 13, 13) des analogen Signals ausgehend von der Interkorrelationsfunktion (I) zu berechnen;
    ◦ Maxima (15, 16 oder 15, 17) der Interkorrelationsfunktion zu identifizieren;
    ◦ Zeiten t1 und t2 zu berechnen, für die die Interkorrelationsfunktion diese Maxima per Interpolation der Interkorrelationsfunktion erreicht, wobei der Rechner darüber hinaus geeignet ist, die Interkorrelationsfunktion nur bei den Zeitintervallen ([t4 - $\Delta$t, t4 + $\Delta$t]) zu interpolieren, bei denen die Zeiten t1 und t2 erwartet werden;
    ◦ Die Dauer (T1, T) zwischen diesen Zeiten t1 und t2 zu berechnen.

7. Vorrichtung gemäß dem voranstehenden Anspruch, **dadurch gekennzeichnet, dass** sie ein erstes (3) und ein zweites Rad (4) umfasst, wobei die Zähne (3a - 3f) des ersten Rades alternierend mit den Zähnen (4a - 4f) des zweiten Rades angeordnet sind.

8. Mit einer Vorrichtung gemäß einem der Ansprüche 6 oder 7 vorgesehene Welle (1).

## Claims

1. A method for determining the torque and/or the rotational speed of a rotating shaft (1), with the aid of:

   - one or more wheels (3, 4) provided with teeth (3a-3f, 4a-4f), each wheel (3, 4) being integral with a point (6, 7) of the shaft (1),
   - a sensor (5) capable of generating a pulse (12, 13, 14) of an analog signal each time a tooth (3a-3f, 4a-4f) passes in front of it;

   the method comprising the following steps:

   - generation of a first and a second analog signal with the aid of the sensor, the second analog signal being offset in time with respect to the first analog signal, the second analog signal having a duration equal to the duration of the first analog signal;
   - conversion of the first and the second analog signal into a first and a second digital signal;

   the method being **characterized in that** it comprises the following steps:

   - calculation of the temporal cross-correlation function (I) of the first digital signal with the second digital signal;
   - calculation of the duration (T1, T) between two pulses (12-13, 12-14) of the first analog signal with the aid of the cross-correlation function (I), the step for calculating the duration between two pulses (12-13, 12-14) comprising the following sub-steps:

     ○ identification of the maxima (15, 16 or 15, 17) of the cross-correlation function;
     ○ calculation of times t1 and t2 at which the cross-correlation function reaches these maxima by interpolation of the cross-correlation function, the interpolation of the cross-correlation function being carried out only over time intervals ([t4-Δt, t4+Δt]) in which times t1 and t2 are expected;
     ○ calculation of the duration (T1, T) between these times t1 and t2.

2. The method according to the preceding claim, wherein a first wheel (3) and a second wheel (4) are used, the first wheel (3) being integral with a first point (6) of the shaft (1) and the second wheel (4) being integral with a second point (7) of the shaft (1), the first point (6) being distant from the second point (7), the first and the second wheel being disposed in such a way that the teeth of the first wheel (3a-3f) are alternated with the teeth (4a, 4f) of the second wheel.

3. The method according to any one of the preceding claims, **characterized in that** the interpolation of the cross-correlation function is carried out by a parabolic interpolation method with least squares.

4. The method according to any one of the preceding claims, **characterized in that** the first analog signal and the second analog signal each have a duration equal to

   - the duration of a complete rotation of the shaft or
   - the duration of a sixth of a rotation of the shaft.

5. The method according to any one of the preceding claims, **characterized in that** the first analog signal and the second analog signal each correspond to the signal generated by the sensor during two rotations or portions of a rotation of the shaft which are consecutive.

6. A device for implementing the method according to any one of claims 1 to 5, comprising:

   - one or more wheels (3, 4) provided with teeth (3a-3f, 4a-4f), each wheel (3, 4) being integral with a point (6, 7) of the shaft (1),
   - a sensor (5) capable of transforming the passage of each tooth (3a-3f, 4a-4f) into pulses (12, 13, 14) of an analog signal (11);
   - an analog-to-digital converter (9, 25) capable of transforming the analog signal from the sensor (5) into a digital signal;

   the device being **characterized in that** it comprises:

   - a computer (10, 29, 30) capable of:

     ○ calculating the cross-correlation function (I) of two digital signals from the analog-to-digital converter;
     ○ calculating the duration (T1, T) between two pulses (12, 13, 13) of the analog signal on the basis of the cross-correlation function (I);
     ○ identifying of the maxima (15, 16 or 15, 17) of the cross-correlation function;
     ○ calculating of times t1 and t2 at which the cross-correlation function reaches these maxima by interpolation of the cross-correlation function, the interpolation of the cross-correlation function being carried out only over time intervals ([t4-Δt, t4+Δt]) in which times t1 and t2 are expected;
     ○ calculating of the duration (T1, T) between these times t1 and t2.

7. The device according to the preceding claim, **char-**

**acterised in that** it comprises a first wheel (3) and a second wheel (4), the teeth (3a-3f) of the first wheel being disposed alternated with the teeth (4a-4f) of the second wheel.

8. A shaft (1) provided with a device according to any one of claims 6 or 7.

**Fig. 1**

**Fig. 2**

**Fig. 3**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19817886
- WO 2004067215 A
- GB 2133885 A
- US 6460422 B
- GB 2383417 A